# EUROPEAN PATENT SPECIFICATION

(11) **EP 1 411 510 B1**
(45) Date of publication and mention of the grant of the patent: **26.09.2007**
(21) Application number: 03256404.9
(22) Date of filing: 10.10.2003
(51) Int. Cl.: G11B 15/26, G11B 15/30, G11B 15/32, G11B 15/44

(54) **Reel assembly**
Spulenvorrichtung
Assemblage de bobine

(30) Priority: 10.10.2002 KR 2002061821; 07.11.2002 KR 2002068836; 18.11.2002 KR 2002071728; 17.01.2003 KR 2003003426
(43) Date of publication of application: 21.04.2004
(73) Proprietor: SAMSUNG ELECTRONICS CO., LTD., Suwon-si, Gyeonggi-do 442-742 (KR)
(72) Inventor: Kim, Bong-joo, Suwon-city Gyunggi-do (KR); Choi, Hyeong-seok 250-1404, Ssangyong Apt., Suwon-city Gyunggi-do (KR); Seo, Jae-kab 601-902, Yuwon Apt., Suwon-city Gyunggi-do (KR); Kim, Jun-young 212-1301, Hangook Apt., Suwon-city Gyunggi-do (KR); Park, Byeong-bae, Ansan-city Gyunggi-do (KR)
(74) Representative: Derry, Paul Stefan

(56) References cited:
- GB-A- 2 307 777
- US-A- 4 234 140
- US-A- 4 480 881
- US-A- 5 573 197
- US-A- 5 758 839
- US-A- 6 042 038
- US-A1- 2002 070 304

## Description

A first aspect of the invention relates to a reel assembly for mounting on a deck of a tape recorder, the reel assembly having a disc, a gear and a clutch, for adjusting the tension and thereby control the running speed of a magnetic tape, the clutch comprising: a plate spring (37) connected with the gear and positioned between the gear and the disc; and a stopper (31) engaged with the disc such that the disc is in reactive contact with the plate spring. A second aspect of the invention relates to reel assembly driving apparatus, for mounting on a deck of a tape recorder, the apparatus having an idle gear and a clutch gear, for generating a torque to drive magnetic tape.

Apparatus which records information on a recording medium such as a magnetic tape, and also reproduces the recorded information from the recording medium is well known. Examples include video cassette recorders and camcorders.

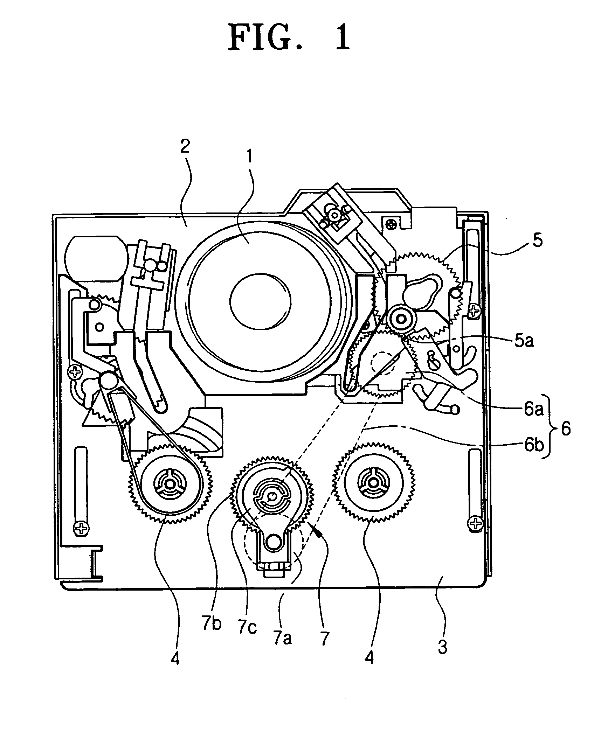

Referring to Figure 1, a conventional magnetic recording/reproducing apparatus includes a main deck 2 on which a head drum 1 is rotatably mounted; a sub deck 3, a pair of reel assemblies 4, a capstan motor 5, a reel assembly driving apparatus 7, and a driving force transmitting unit 6. The sub deck 3 can be loaded and unloaded with respect to the main deck 2. The reel assemblies 4 are rotatable with respect to the sub deck 3 and drive the tape reel of the tape cassette. The assembly driving apparatus 7 receives the driving force from the capstan motor 5 at the main deck 1 and selectively transmits the received driving force to the pair of reel assemblies 4. The driving force transmitting unit 6 transmits the driving force from the capstan motor 5 to the reel assembly driving apparatus 7.

The reel assemblies 4 include a supply part reel table (shown left in Figure 1) to supply magnetic tape from the tape cassette, and a take-up part reel table (right in Figure 1) to wind the magnetic tape as supplied.

The driving force transmitting unit 6 includes a capstan gear 6a, driven in association with an axis gear 5a of the capstan motor 5, and a timing belt 6b, to transmit the driving force from the capstan gear 61 a to the reel assembly driving apparatus 7. The reel assembly driving apparatus 7 includes a pulley gear unit 7a, which is connected with a timing belt 6b, an idle gear 7b driven in association with the pulley gear unit 7a, and a pivoting plate 7c connecting the pulley gear unit 7a to the idle gear 7b.

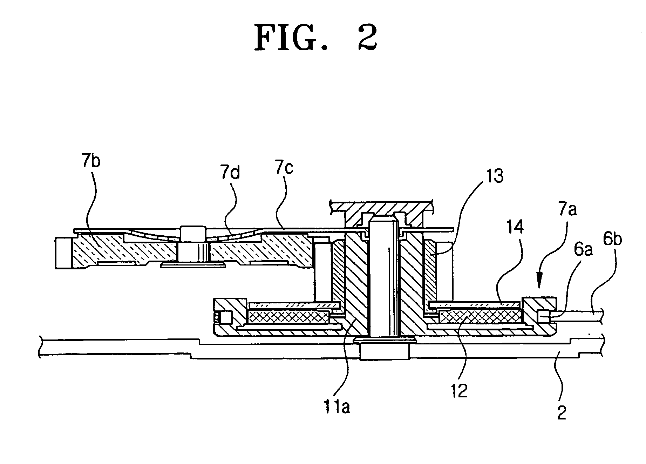

As shown in Figure 2, the pivoting plate 7c may have an elastic part 7d which is cut in a predetermined pattern in the central portion of the pivoting plate 7c so as to function as a plate spring. Because the elastic part 7d is contacted with the idle gear 7b with a predetermined frictional force, when the idle gear 7b shifts the direction of its rotation, the pivoting plate 7c is subjected to a torque which causes the pivoting plate 7c to pivot. Accordingly, the idle gear 7b can be selectively connected to the left and right reel assemblies 4.

In the above-described construction, some of the rotational force of the pulley gear 11 is transmitted to a clutch gear 13 by the magnetic force generated between a magnet 12 and a metallic part 14. Since the rotational force can be reduced as the force is transmitted via the idle gear 7b to the appropriate reel assembly 4, the tape reel of the tape cassette can be rotated with the correct force.

However, because in the above apparatus some components are required to provide a predetermined frictional force to the idle gear 7b to pivot the pivoting plate 7c, the overall construction is fairly complicated. The components required to control the torque to the tape cassette reel provide more complication in the construction. The magnet employed in the apparatus also is usually expensive.

Alternatively, a frictional force generator, i.e., a torque generator as provided to the pulley gear unit 7a, could be provided to the pair of reel assemblies 4. However, this alternative also requires expensive components of rather complicated structure.

GB 2307777 discloses a reel driving device including a friction clutch.

It is an aim of the present invention to reduce construction complexity and/or manufacturing cost.

To achieve this aim a reel assembly and a reel assembly apparatus as defined in the appended claims is proposed.

The first aspect of the invention is characterised in that the spring is a plate spring.

The second aspect of the invention is characterised in that the clutch gear is connected with a clutch comprising:
a plate spring located between the clutch gear and the idle gear; and
a rotatable body engaged with the idle gear such that the idle gear is in reactive contact with the plate spring.

An embodiment will now be described, by way of example only, with reference to the accompanying drawings, of which:
Figure 1 is a schematic plan view illustrating a conventional magnetic recording/reproducing apparatus;
Figure 2 is a sectional view illustrating a reel assembly driving apparatus of the Figure 1 apparatus;
Figure 3 is a perspective view illustrating an assembly of a magnetic recording/reproducing apparatus according to the present invention, before assembly;
Figure 4 is a sectional view illustrating the Figure 3 assembly after assembly;
Figure 5 is a perspective view of an upper reel of the Figure 3 assembly;
Figure 6 is a sectional view illustrating a reel assembly according to a second embodiment of the present invention;
Figure 7 is a perspective view of the reel gear of Figure 6; and
Figure 8 is a sectional view illustrating a reel assembly driving apparatus according to a third embodiment of the present invention.

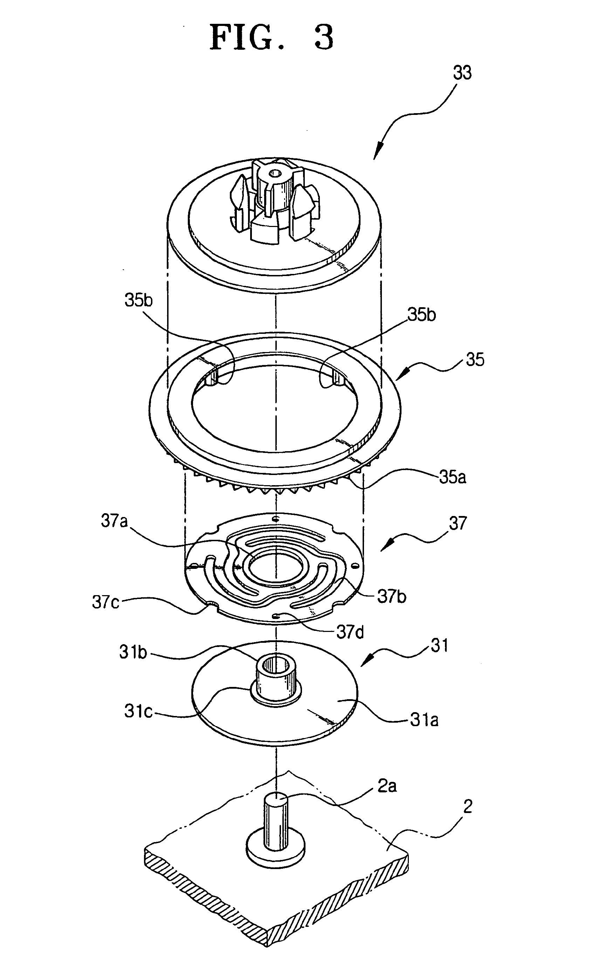

Referring to Figures 3, 4 and 5, the reel assembly includes a lower reel 31 rotatable with respect to a fixed or stationed axis 2a of the main deck 2, an upper reel 33 (or reel disc) joined with the upper portion of the lower reel 31 (or stopper reel), and a clutch member 37 disposed between the lower and upper reels 31, 33.

The lower reel 31 has an axial portion 31 b protruding from the centre of a circular body 31 a to a predetermined height. The stationed axis 2a is fitted to the axis portion 31 b. Around the lower portion of the axis portion 31 b and on the upper surface of the circular body 31 a is formed a protruding part 31 c formed with a predetermined height. There is formed an axis hole 33a in the lower surface of the upper reel 33 so that the axis portion 31b can be inserted in the axis hole 33a of the upper reel 33 to a predetermined depth. The axis portion 31b is force-fitted in the axis hole 33a. Accordingly, the upper and lower reels 31, 33 are rotatable together.

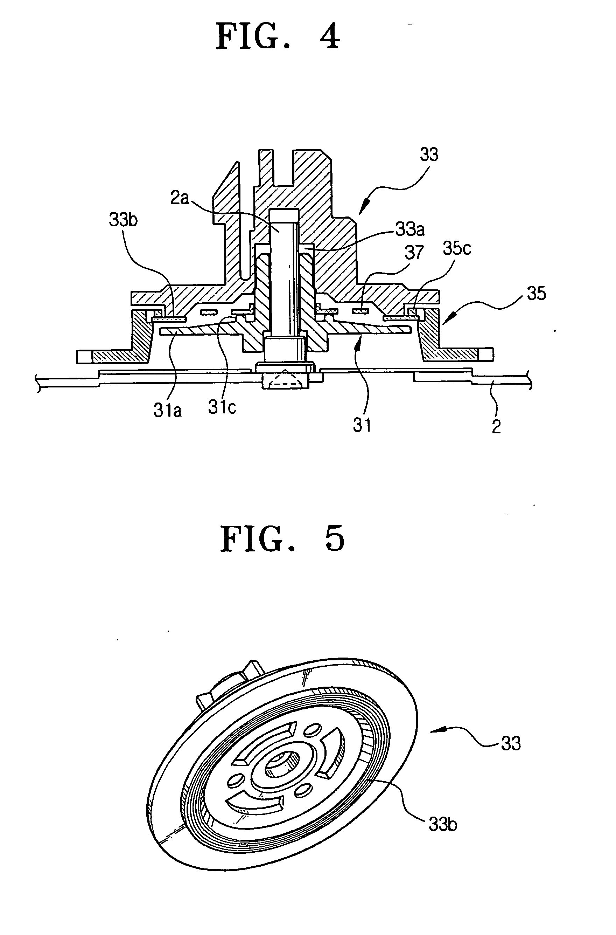

The upper portion of the upper reel 33 is protruded in a predetermined shape so that a tape reel of a tape cassette can be securely seated thereon. Around the lower surface of the upper reel 33 is formed an annular rib 33b, which is protruded to urge elastically the outer rim of the clutch member 37 downwards. Also, as shown in Figure 5, a serration is formed on the surface of the rib 33b with a predetermined roughness. The serration is formed along the surface of the rib 33b in an annular fashion.

The reel gear 35 is disposed between the upper and lower reels 31, 33. The reel gear 35 has an annular shape, and is provided with gear teeth 35a formed along the outer circumference. The gear teeth 35a are selectively connected to the idle gear 7b of the driving apparatus of Figure 1. The clutch member 37 is fitted into the reel gear 35. In order to secure the clutch member 37 in position, locking protrusions 35b are formed along the inner circumference of the reel gear 35. The locking protrusions 35b extend in the direction along which the clutch member 37 is fitted into the reel gear 35, and also provided at regular intervals. The reel gear 35 is connected to the upper and lower reels 31, 33 only by the intervention of the clutch member 37, and is not directly contacted with the upper and lower reels 31, 33.

The clutch member 37 functions to reduce the rotational force of the reel gear 35 and to transmit the reduced rotational force to the upper and lower reels 31, 33. The clutch member 37 is a plate spring. It includes an axis hole 37a into which the axis portion 31b is inserted. The clutch member 37 also has slits 37b which the clutch member 37 to move elastically in the vertical direction under force. The clutch member 37 also has a plurality of locking holes 37c formed in the outer circumference to correspond to the locking protrusions 35b. The clutch member 37 also has a plurality of fitting holes 37d to fit with hooks 35c of the reel gear 35. The clutch member 37 supported on the reel gear 35 is contacted with, and thus supported by, the upper and lower reels 31, 33.

A central part of the clutch member 37 is contacted with the protruding part 31c of the lower reel 31 and thus elastically urged upward. The outer rim of the clutch member 37 is elastically urged downward by the contact with the rib 33b of the upper reel 33. Due to the contact between the clutch member 37 and the upper and lower reels 31, 33, rotational force of the reel gear 35 is transmitted to the upper and lower reels 31, 33. Here, rotational force is not necessarily entirely transmitted to the upper and lower reels 31, 33, but is transmitted by a reduced degree in accordance with the degree of frictional force which is caused by the clutch member 37.

Preferably, a lubricant (not shown) is applied between the upper reel 33 and the clutch member 37, to the lower surface of the upper reel 33 and the upper surface of the clutch member 37 at the point where the annular ribs 33b contact the outer rim of the clutch member 37.

In the reel assembly of the magnetic recording/reproducing apparatus constructed as above, the elastic clutch member 37 is firmly secured to the reel gear 35 and does not sway or move. Further, because the clutch member 37 is positioned accurately by the upper and lower reels 31, 33, the resilience of the clutch member 37 seldom varies, and therefore, the frictional force with the neighbouring components can be maintained substantially constant. As a result, the driving force from the reel gear 35 to the upper and lower reels 31, 33 can be kept substantially constant. Additionally, because the reel assembly has a simple structure and does not require an expensive magnet, manufacturing costs can be kept low.

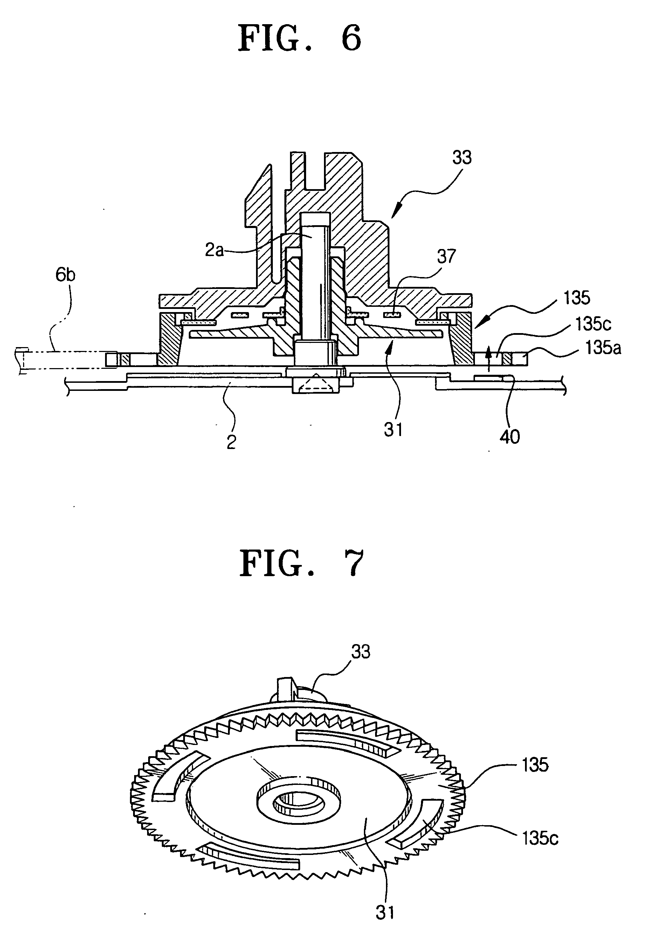

Referring now to Figures 6 and 7, a reel assembly of a magnetic recording/reproducing apparatus according to a second embodiment of the present invention will be described. Like reference numerals are used for like elements.

Shown in Figures 6 and 7, there is a light receiving/emitting sensor 40, for sensing the rotational status of a reel gear 135 with respect to the sub deck 3. The reel gear 135 has gear teeth 125a which are engaged with the idle gear 7b (Figure 1) of the reel assembly driving apparatus. The driving force, which is transmitted to the reel gear 135 via the idle gear 7b, generates a torque with the intervention of the clutch member 37 so as to cause the upper reel 33 to rotate at a predetermined speed.

The reel gear 135 has a plurality of sensing holes 135c, extending in the direction of rotation. The sensing holes 135c allow light from the light receiving/emitting sensor 40 to pass therethrough. As shown in Figure 7, the sensing holes 135c are formed at equal intervals in the direction of rotation of the reel gear 135. The sensor 40 emits light toward the reel gear 135, and also receives light reflected from the reel gear 135, to sense the rotational status (i.e. rotating or not) and the speed of the reel gear 135. Because the light is reflected from the reel gear 135 except where the sensing holes 135c are, the light sensor 40 can determine the rotational status of the reel gear 135 through repetitive reception and non-reception of the light reflected from the reel gear 135. When the reel gear 135 is not rotated, this is detected by the sensor 40. The reel gear 135 is preferably made of white material which can reflect the light effectively, although other colours can also be used. Alternatively, the reel gear 135 could be provided with a reflective film, or with regions of light absorbent material instead of holes.

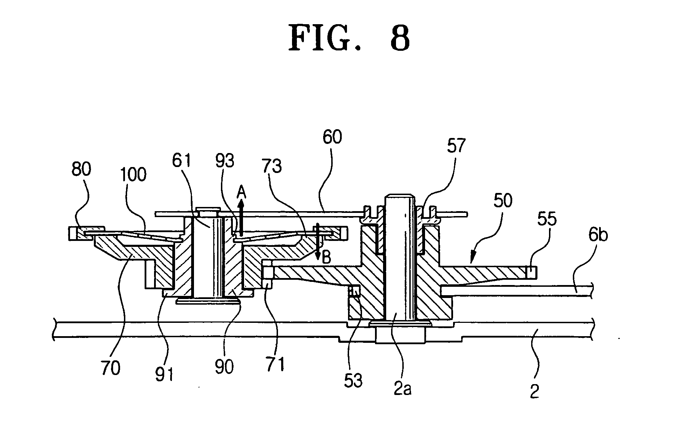

Referring to Figure 8, the reel assembly driving apparatus according to a third preferred embodiment of the present invention will be described. As shown in Figure 8, the reel assembly driving apparatus includes a main gear 50 which is rotatable with respect to the main deck 2, a rotating lever 60 which is rotatable with respect to the upper portion of the main gear 50, an idle gear 70 engaged with the main gear 50, a clutch gear 80 arranged coaxially with the idle gear 70, a rotating body 90 rotatably supported on the rotating lever 60, and an elastic clutch member 100.

The main gear 50 is rotatably supported on the stationed or fixed axis 2a of the main deck 2 so as to be rotated by the driving force transmitted from the capstan motor 5 (Figure 1). A pulley part 53, being connected with the timing belt 6b, is provided to the lower end of the main gear 50. A gear part 55 of the main gear 50 above the pulley part 53 is engaged with the idle gear 70. A clamp 57 at the upper portion of the axis 2a prevents the main gear 50 from leaving the axis 2a.

The clamp 57 supports one end of the rotating lever 60, while there is a fixed axis 61 formed at the other end of the rotating lever 60.The fixed axis 61 is provided at the lower portion of the rotating lever 60. As shown in Figure 1, the rotating lever 60 is rotated to connect selectively to one of the pair of reel assemblies 4. The rotating force of the rotating lever 60 is transmitted from the main gear 50 to the idle gear 70, the clutch member 100 and the rotating body 90, respectively. When there is a frictional force between the rotating body 90 and the rotating lever 60, torque is generated at the rotating lever 60 to cause it to rotate.

The idle gear 70 has a gear part 71 which is engaged with the gear part 55 of the main gear 50. The idle gear 70 is rotatably engaged with the outer circumference of the rotating body 90. The idle gear 70 has an upper flange 73 which presses against the outer rim of the clutch member 100. It is prevented from moving downwards as shown by contact with a movement restriction protrusion 91 formed on the lower end of the rotating body 90. The clutch gear 80 is engaged to one of the pair of reel assemblies 4 to transmit the driving force. The clutch gear 80 is secured to the outer side of the clutch member 100. Due to the friction between the upper flange 73 and the contacting area of the clutch member 100, a torque is generated, and the clutch gear 80 is rotated by the generated torque.

The rotating body 90 is rotatable with respect to the fixed axis 61, and is supported such that the rotating body 90 can be moved vertically along the axis 61. The rotating body 90 also has a locking groove 93 into which an inner circumference of the clutch member 100 is securely fitted. The rotating body 90 is subjected to a force in the 'A' direction due to the elastic recovery force of the clutch member 100, and thus is urged to maintain contact with the rotating lever 60 at an upper part with a predetermined force. The rotating body 90 is integral with and thus is rotated with the clutch member 100.

The clutch member 100 adjusts the rotational speed of the reel assemblies 4 by preventing direct transmission of the driving force from the main gear 50 to the reel assemblies 4. The clutch member 100 functions to reduce the driving force from the main gear 50 before transmitting it to the reel assemblies. The clutch member 100 is a plate spring, which is deformable and recoverable. The clutch member 100 is secured at its outer part to the clutch gear 80. The clutch member 100 preferably is integrally secured to the clutch gear 80, for example by an insert melding. The centre of the clutch member 100 is securely locked in the locking groove 93 of the rotating body 90. As the clutch member 100 is pressed toward the idle gear 73, the rim of the clutch member 100 is subjected to the elastic recovery force in the 'B' direction, while the centre of the clutch member 100 is subjected to the elastic recovery force in the 'A' direction. As a result, at the contact area between the clutch member 100 and the idle gear 70, a 'clutching effect' can be obtained, since the driving force can be adjusted downwardly before being transmitted. Further, due to the elastic recovery force in the 'A' direction, the rotating body 90 and the rotating lever 60 are integrally rotated with respect to the main gear 50.

In the reel assembly driving apparatus described above, the clutch member 100, i.e., the plate spring, serves as a clutch to adjust the driving force which is transmitted from the main gear 50 to the reel assemblies 4, and also serves as a torque generator which enables the rotating lever 60 to change the direction of rotation. Accordingly, expensive components such as magnets can be omitted, and two torques can be obtained in the same area. As a result, as the number of necessary parts can decrease, the assembly process can be simplified, and manufacturing costs can be reduced.

## Claims

1. A reel assembly for mounting on a deck of a tape recorder the reel assembly having a disc (33), a gear (35) and a clutch, ,
wherein the clutch comprises ;
a plate spring (37); and
a stopper (31),
wherein the stopper (31), the plate spring (37) and the gear (35) each are arranged rotatable with respect to an common axis (2a),
wherein the stopper (31) is engaged with the disc (33) such that the disc (33) is in reactive contact with the plate spring (37) for generating a frictional force between the disc (33) and the plate spring (37),
and wherein the plate spring (37) is locked with the gear (35) by locking means (35b, 35c, 37c, 37d) for receiving the rotational force from the gear(35),
and wherein the plate spring (37) is positioned between the gear (35) and the disc (33), and is biased against the disc (33),
the plate spring (37) thereby transmitting in a reduced degree the rotational force from the gear (35) to the disc (33) and to the stopper (31) for adjusting the tension and thereby control the running speed of a magnetic tape.

2. An assembly according to claim 1, wherein a surface of the disc (33) which contacts the plate spring (37) is provided with serrations (33b).

3. An assembly according to any preceding claim, wherein the plate spring comprises a plate body formed with one or more slits (37b).

4. An assembly according to any preceding claim, wherein lubricant is interposed between the disc (33) and the plate spring (37).

5. An assembly according to any preceding claim, wherein the assembly further comprises a light sensor (40) and the gear comprises one or more sensing regions (135c).

6. An assembly according to claim 5, wherein the light sensor (40) is arranged to emit light toward the gear (35), and to detect reflected light.

7. Reel assembly driving apparatus, for mounting on a deck of a tape recorder, the apparatus having an idle gear (70) and a clutch gear (80), and a clutch,,
each arranged rotatable with respect to an common axis (61)
the clutch comprising:
a plate spring (100) located between the clutch gear (80) and the idle gear (70); and
a rotatable body (90) rotatably engaged with the idle gear (70) such that the idle gear (70) is in reactive contact with the plate spring (100) for generating a frictional force between said idle gear (70) and said plate spring (100),
wherein the plate spring (100) is secured to the clutch gear (80), the plate spring (100) thereby transmitting in a reduced degree the rotational force from the clutch gear (80) to the idle gear (70) for generating a torque to drive magnetic tape.

## Patentansprüche

1. Spulenanordnung zum Anbringen an einem Deck eines Bandaufzeichnungsgeräts, wobei die Spulenanordnung eine Scheibe (33), einen Zahnradantrieb (35) und eine Kupplung aufweist,
wobei die Kupplung Folgendes umfasst:
eine Tellerfeder (37); und
einen Anschlag (31),
wobei der Anschlag (31), die Tellerfeder (37) und der Zahnradantrieb (35) jeweils in Bezug auf eine gemeinsame Achse (2a) drehbar angeordnet sind,
wobei der Anschlag (31) in Eingriff mit der Scheibe (33) steht, derart, dass die Scheibe (33) sich in reagierendem Kontakt mit der Tellerfeder (37) befindet, um eine Reibungskraft zwischen der Scheibe (33) und der Tellerfeder (37) zu erzeugen,
und wobei die Tellerfeder (37) mit dem Zahnradantrieb (35) durch Verkeilungsmittel (35b, 35c, 37c, 37d) verkeilt ist, um die Drehkraft von dem Zahnradantrieb (35) zu empfangen,
und wobei die Tellerfeder (37) zwischen dem Zahnradantrieb (35) und der Scheibe (33) angeordnet ist, und gegen die Scheibe (33) vorgespannt ist,
wodurch die Tellerfeder (37) eine reduzierte Menge der Drehkraft von dem Zahnradantrieb (35) auf die Scheibe (33) und auf den Anschlag (31) überträgt, um die Spannung anzupassen, und um auf diese Weise die Laufgeschwindigkeit eines Magnetbands zu steuern.

2. Anordnung nach Anspruch 1, wobei eine Fläche der Scheibe (33), die in Kontakt mit der Tellerfeder (37) steht, mit Kerbungen (33b) versehen ist.

3. Anordnung nach einem der vorangehenden Ansprüche, wobei die Tellerfeder einen Tellerkörper umfasst, der mit einem oder mehreren Schlitzen (37b) ausgebildet ist.

4. Anordnung nach einem der vorangehenden Ansprüche, wobei ein Schmiermittel zwischen der Scheibe (33) und der Tellerfeder (37) aufgebracht ist.

5. Anordnung nach einem der vorangehenden Ansprüche, wobei die Anordnung ferner einen Lichtsensor (40) umfasst, und der Zahnradantrieb eine oder mehrere Messregionen (135c) umfasst.

6. Anordnung nach Anspruch 5, wobei der Lichtsensor (40) so angeordnet ist, dass er Licht in Richtung des Zahnradantriebs (35) abgibt, und reflektiertes Licht erfasst.

7. Spulenanordnungsantriebsvorrichtung zum Anbringen an einem Deck eines Bandaufzeichnungsgeräts, wobei die Vorrichtung ein Leerlaufzahnrad (70) und ein Kupplungszahnrad (80), und eine Kupplung aufweist, die jeweils in Bezug auf eine gemeinsame Achse (61) drehbar angeordnet sind,
wobei die Kupplung Folgendes umfasst:
eine Tellerfeder (100), die zwischen dem Kupplungszahnrad (80) und dem Leerlaufzahnrad (70) angeordnet ist; und
einen Drehkörper (90), der drehbar in Eingriff mit dem Leerlaufzahnrad (70) steht, derart, dass das Leerlaufzahnrad (70) sich in reagierendem Kontakt mit der Tellerfeder (100) befindet, um eine Reibungskraft zwischen dem Leerlaufzahnrad (70) und der Tellerfeder (100) zu erzeugen,
wobei die Tellerfeder (100) an dem Kupplungszahnrad (80) gesichert ist, wodurch die Tellerfeder (100) eine reduzierte Menge der Drehkraft von dem Kupplungszahnrad (80) an das Leerlaufzahnrad (70) überträgt, um ein Drehmoment zum Antreiben von Magnetband zu erzeugen.

## Revendications

1. Ensemble de pièces mécaniques montées axialement destiné à être monté sur une platine d'un magnétophone, l'ensemble de pièces mécaniques montées axialement comportant un disque (33), un engrenage (35) et un embrayage,
dans lequel l'embrayage comprend :
un ressort à lame (37) ; et
une butée (31),
dans lequel la butée (31), le ressort à lame (37) et l'engrenage (35) sont chacun agencés de manière rotative par rapport à un axe commun (2a),
dans lequel la butée (31) est en prise avec le disque (33) de telle sorte que le disque (33) est en contact réactif avec le ressort à lame (37) pour générer une force de frottement entre le disque (33) et le ressort à lame (37),
et dans lequel le ressort à lame (37) est verrouillé avec l'engrenage (35) par un moyen de verrouillage (35b, 35c, 37c, 37d) permettant de recevoir la force de rotation de l'engrenage (35),
et dans lequel le ressort à lame (37) est positionné entre l'engrenage (35) et le disque (33) et est incliné contre le disque (33),
le ressort à lame (37) transmettant ainsi dans une mesure réduite la force de rotation de l'engrenage (35) au disque (33) et à la butée (31) pour ajuster la tension et ainsi commander la vitesse de déplacement d'une bande magnétique.

2. Ensemble selon la revendication 1, dans lequel une surface du disque (33) qui touche le ressort à lame (37) est muni de dentelures (33b).

3. Ensemble selon l'une quelconque des revendications précédentes, dans lequel le ressort à lame comprend un corps de disque formé d'une ou de plusieurs fentes (37b).

4. Ensemble selon l'une quelconque des revendications précédentes, dans lequel du lubrifiant est intercalé entre le disque (33) et le ressort à lame (37).

5. Ensemble selon l'une quelconque des revendications précédentes, dans lequel l'ensemble comprend en outre un capteur de lumière (40) et l'engrenage comprend une ou plusieurs régions de détection (135c).

6. Ensemble selon la revendication 5, dans lequel le capteur de lumière (40) est agencé pour émettre de la lumière vers l'engrenage (35), et détecter la lumière réfléchie.

7. Dispositif de commande d'ensemble bobine, destiné au montage sur une platine d'un magnétophone, le dispositif présentant un pignon fou (70) et un pignon d'embrayage (80) et un engrenage, chacun étant agencé de manière rotative par rapport à un axe commun (61)
l'embrayage comprenant :
un ressort à lame (100) situé entre le pignon d'embrayage (80) et le pignon fou (70) ; et
un corps rotatif (90) en prise rotative avec le pignon fou (70) de sorte que le pignon fou (70) soit en contact réactif avec le ressort à lame (100) pour générer une force de frottement entre ledit pignon fou (70) et ledit ressort à lame (100), dans lequel le ressort à lame (100) est fixé au pignon d'embrayage (80), le ressort à lame (100) transmettant ainsi dans une mesure réduite la force de rotation du pignon d'embrayage (80) au pignon fou (70) permettant de générer un couple pour entraîner la bande magnétique.
